Europäisches Patentamt

European Patent Office

Office européen des brevets

(19)

(11) Publication number : **0 666 168 A1**

# (12) EUROPEAN PATENT APPLICATION

(21) Application number : 95300435.5

(51) Int. Cl.⁶ : **B32B 15/08, B65D 25/14**

(22) Date of filing : 25.01.95

(30) Priority : **07.02.94 JP 33225/94**

(43) Date of publication of application :
**09.08.95 Bulletin 95/32**

(84) Designated Contracting States :
**DE FR GB IT**

(71) Applicant : **TOYO KOHAN Co., Ltd**
**4-3 Kasumigaseki 1-chome,**
**Chiyoda-ku**
**Tokyo 100 (JP)**

(72) Inventor : **Shimizu, Keiichi**
**37-21, Nijigaoka 4-chome**
**Hikari-shi, Yamaguchi-ken (JP)**
Inventor : **Tanabe, Junichi**
**5028-6, Ihonosho**
**Yanai-shi, Yamaguchi-ken (JP)**
Inventor : **Kunishige, Humio**
**1969, Nishitoyoi**
**Kudamatsu-shi, Yamaguchi-ken (JP)**
Inventor : **Tanaka, Atsuo**
**5-2, Enomiyacho**
**Tokuyama-shi, Yamaguchi-ken (JP)**

(74) Representative : **Towler, Philip Dean**
**Frank B. Dehn & Co.**
**European Patent Attorneys**
**Imperial House**
**15-19 Kingsway**
**London WC2B 6UZ (GB)**

(54) **Resin-laminated steel sheet.**

(57)    A steel sheet is disclosed which is laminated on both sides with a resin film. A two-piece can having a can height about twice the length of the can diameter and a wall thickness from 40 to 70% of the original sheet thickness can be formed from the steel sheet under a special wall thickness reduction process without the use of water-based coolants or lubricants.

EP 0 666 168 A1

## Field of the Invention

The present invention relates to a metal sheet, of which both sides are laminated with a thermoplastic resin film, suitable for the production of a two-piece can having a thin wall formed under a wall thickness reduction process including ironing without the use of water-based coolants or lubricants.

## Background of the Invention

Two-piece cans are generally DRD (drawn and redrawn can) or DWI (drawn and wall-ironed can) produced from tin plated steel sheet, aluminium sheet, aluminium alloy sheet or ECCS (electrolytically chromium coated steel). Recently, DTR (drawn thin-redrawn can) has also been put to practical use. DRD has a rather thick wall which becomes thicker in proportion to the can height due to drawing and redrawing. For reasons of economy, it is therefore used for cans having a rather low can height. The materials used for DRD are ECCS, tin plated steel sheet or aluminium alloy sheet. On the other hand, DWI can economically be applied to cans having high can heights because the wall thickness can be reduced to one third of that of the original sheet. The materials presently used for DWI are tin plated steel sheet or aluminium alloy sheet. There is a great difference between DRD and DWI in that the former is formed by drawing a metal sheet precoated with an organic coating, whilst the latter is formed by ironing a metal sheet which is coated after forming. This is attributed to the fact that the extent of reduction of the thickness of the can wall and the state of stress during the processing are very different for DRD and DWI. The use of a metal sheet covered with an organic coating for DWI has not yet proved to be practical. This is because the extent of reduction of the can wall thickness and the surface pressure on the can wall are extremely high for DWI, which leads to seizing of the organic coating to the dies, or to the damage of the organic coatings on the outer and inner surfaces of the can.

On the other hand, DTR (drawn and thin-redrawn can) is formed by thinning the can wall in a process which includes bending and bending-back at the corner of drawing dies having a small corner radius, and applying a high tensile stress. DTR, which is formed by a process resembling drawing, has a can wall a little thinner than the original sheet because the can wall is stretched. In addition, a high surface pressure is not applied to the can wall lying between the dies and the punch in the DTR process, unlike in the ironing process. As the surface pressure applied is not as high as in the DWI process, the organic coating is hardly damaged, and a metal sheet covered with an organic coating can therefore be used in DTR. ECCS covered with a thermoplastic resin film is used industrially at present. However, in the DTR process the can wall is apt to break during the forming because it is mainly formed with a tensile stress. Therefore, the wall thickness is limited to about 80% of that of the original sheet and is thicker than that of DWI.

As described above, there are advantages and disadvantages in DRD, DWI or DTR, and in the processing of them. The objective of the present invention lies in producing a steel sheet of which both sides are laminated with a thermoplastic resin film suitable for the production of a can having a can height about twice the can diameter, and a wall thickness from 40 to 70% of the original sheet thickness like DWI. The most important objective lies in producing a steel sheet laminated with a thermoplastic resin film which can be formed into a can without the use of the emulsions or water soluble lubricants presently used for cooling and lubrication in the DWI process. If a steel sheet previously laminated with a thermoplastic resin film is used, then the coating and baking process can be omitted from the process currently used for producing cans, thus preventing the diffusion of solvent. The subsequent rinsing, drying and waste water disposal processes can then also be omitted. There has not been a disclosure relating to a metal sheet laminated with a thermoplastic resin film from which a can having a high can height and a thin wall can be produced without the use of such a water based coolant or lubricant, nor to such a can or the process of producing it.

Laid-Open Japanese Patent Publication No. Sho. 62-275172 describes a metal sheet covered with an organic coating for a two-piece can. The objective of this publication is to increase the retention of coolant (water-based cooling and lubricating agent) at the outer surface of a can in a DWI process. It differs from the present invention in that it depends on the use of a water-based cooling and lubricating agent.

WO89/03303 shows a metal sheet for DWI of which one or both sides is covered with a polyester resin film, but the production process of DWI from this laminated sheet includes the use of a suitable lubricant in the drawing process, and it is assumed that the rinsing process cannot be totally eliminated. A small rinser, rather than a large can washer, is therefore still required. By contrast, the present invention allows the total elimination of the rinsing process. Laid-Open Japanese Patent Publication No. Hei. 4-91825 shows a metal sheet covered with a thermoplastic resin from which a can having a thin wall is formed by bending and bending back with a lubricant which is volatilized at a high temperature but without a water-based cooling and lubricating agent. It relates to DTR, but as shown in its Examples the reduction ratio of the can wall thickness is about 20% which is smaller than the goal reduction ratio of the present invention.

In the present invention the can height becomes higher in proportion to the degree of thinning of the can wall in the range of 40 to 70% of the original sheet thickness. This serves the aim of the present invention, but the greater the reduction ratio of the can wall thickness is, the more likely are the seizure of the outer can wall to the dies and the damage of the resin layer or the breakage of the wall. Due to the absence of water-based cooling and lubricating agents, the prevention of damage to the resin layer on the outside can wall and the breaking of the can wall due to it are the most important objectives. In addition, it is another important objective to provide enough adhesive strength between the steel sheet and the laminated resin layer because this decreases in proportion to the extent of reduction of the thickness of the can wall.

**Summary of the Invention**

The objective of the present invention is producing a steel sheet laminated with a thermoplastic resin, from which a two-piece can having a thin wall can be easily formed by dry forming, the can so formed having enough pressure proof strength, corrosion resistance and adhesive strength between the steel sheet and the laminated resin layer after forming. In order to improve the formability in the dry forming and achieve the desired strength of the can according to the present invention, the chemical composition, the other mechanical and physical characteristics and the surface profile of the steel sheet used are defined within a preferred range. Also, the steel sheet is electrolytically treated in a chromate solution in order to provide enough adhesive strength between the steel sheet and the laminated resin layer. The thermoplastic resin is preferably a polyester resin, more preferably a polyethylene terephthalate or a co-polyester resin mainly composed of ethylene terephthalate units, having a thickness from 10 to 50 μm and a melting temperature from 180 to 260°C. The definition of these factors within a preferred range leads to excellent formability in the dry forming and excellent corrosion resistance.

In addition, the coating of a lubricant which is volatilized at a high temperature on the surface of the laminated resin layer can improve the formability in the dry forming, and the lubricant can be removed by heating the can after the forming stage. The degreasing, rinsing or drying processes can then be omitted. It is also preferable to apply a suitable forming process for the present invention in order to practise the dry forming at high reduction ratios without any trouble. The application of a composite process, composed of a drawing and an ironing step under a specified condition (that is, a wall thinning process where the resin laminated on both sides of a can is not damaged and the can wall does not break) to the resin laminated steel sheet of the present invention can more effectively accomplish the objective of the present invention.

The laminated steel sheet of the present invention is suitable for use in the dry forming process disclosed in the European patent application No. 94305784.4.

**Brief Description of the Figures**

For a better understanding of the present invention, reference is made hereunder to the following non-limiting, schematic drawings.

Fig. 1 shows a cross sectional drawing of the resin laminated steel sheet of the present invention.

Figs. 2A-2E are schematic views relating to a mode of the process wherein a can having a thin wall is produced by dry forming from the resin laminated steel sheet of the present invention.

Fig. 3 shows a partial cross-sectional drawing showing the composite process composed of drawing and ironing suitable for producing a can having a thin wall and a high can height by dry forming from the resin laminated steel sheet of the present invention.

Fig. 4 shows a cross-sectional drawing of a can produced from the resin laminated steel sheet of the present invention.

Fig. 5 shows a diagram showing an example profile of the wall thickness of a can produced from the resin laminated steel sheet of the present invention.

**Detailed Description of the Invention**

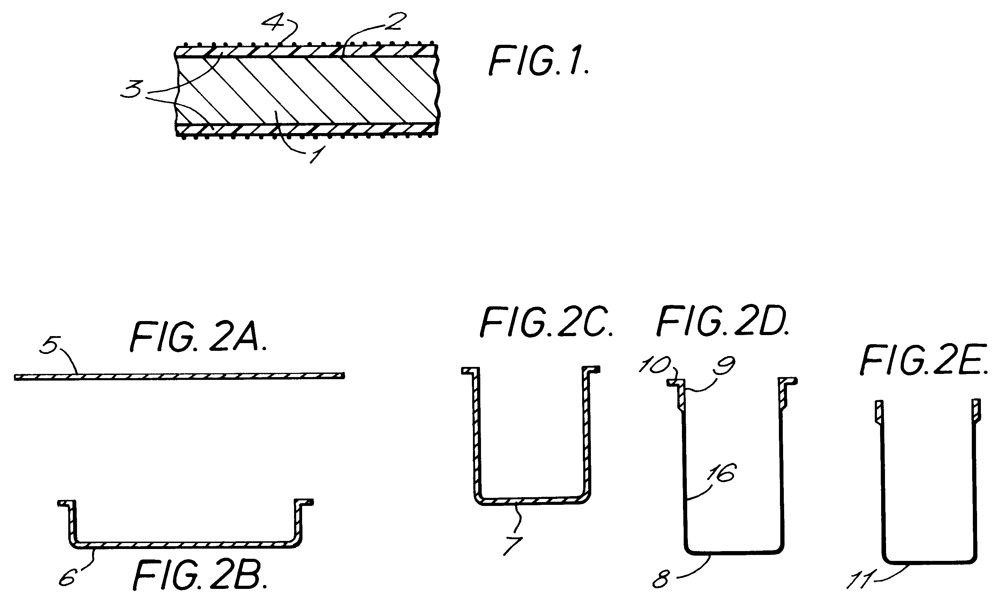

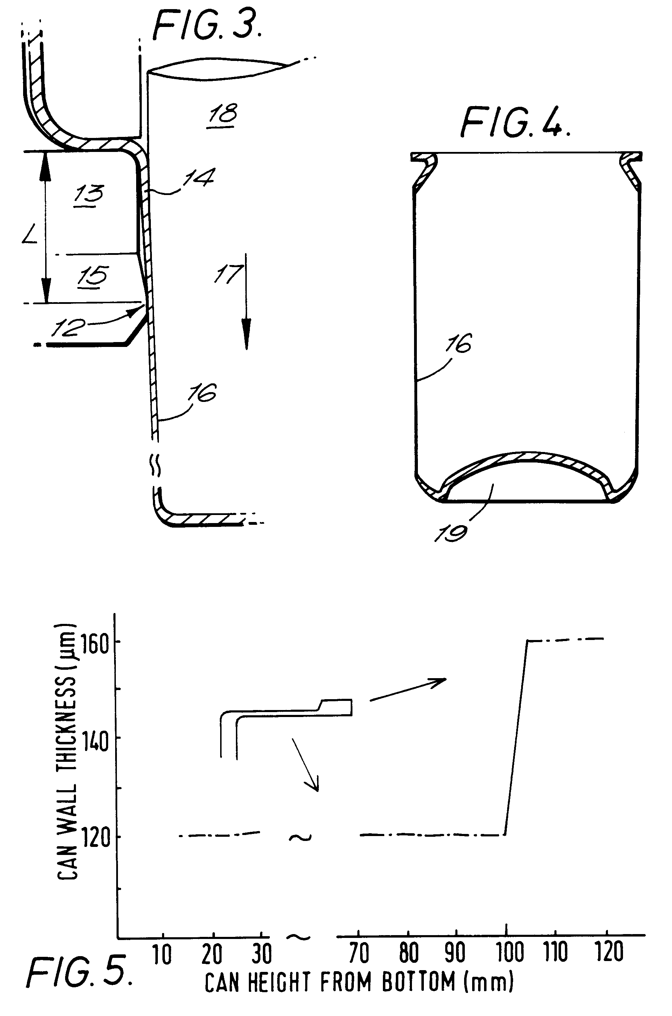

In the present invention, as shown in Fig. 1, a steel sheet 1, covered with a layer 2 composed of an upper layer of hydrated chromium oxide and a lower layer of metallic chromium, of which both sides are laminated with a thermoplastic resin 3 coated on the one side with a lubricant 4 which is volatilized at a high temperature, has to be reduced to a thin gauge by dry forming with a high reduction ratio. The difficulties such as heat generated due to processing, followed by softening or melting of the laminated resin due to the heat generated, resulting in direct contact of the base steel with the forming dies and the breakage of the can wall, have to be surmounted. The heat generated due to processing is caused by deformation of the steel and by friction. The heat generation based on the deformation decreases when the processing intensity and the deformation resistance is low. In the ironing step of the composite process described herein, the heat generation due to friction, proportional to (surface pressure) x (friction coefficient), decreases when the deformation resistance is low. In addition, when the resin is heated, the damage to the laminated resin layer diminishes when the surface pressure is low. Thus, the damage to the resin layer diminishes when the processing intensity is low and the deformation resistance is as low as possible. As the laminate is drawn and redrawn before it is ironed, as shown in Fig. 3, it is desirable that the extent of work hardening is as little as possible. For this reason the chemical composition, the crystal grain size and the aging index of the steel sheet are defined.

Firstly, the reason why the chemical composition of the steel sheet is defined is described below. The presence of carbon makes steel harder and makes the crystal grain fine. When the crystal grain is fine, the surface is hardly roughened by forming, which is preferable for the adhesion to the laminated resin, but the work hardening increases. As the hardening of the steel is undesirable for the dry forming of the present invention, the upper limit of carbon quantity is defined as 0.1%. On the other hand, when carbon quantity is less than 0.001%, the work hardening is low but the crystal grains become large and a rough surface is apt to be caused during the redrawing and ironing processes which are essential in the present invention. The adhesive strength to the resin layer therefore decreases, and in addition there is stress concentration due to the rough surface and the can wall is apt to break during the forming.

Manganese, the presence of which also hardens steel, should be present in less than 0.5%. On the other had, some manganese is necessary to prevent the hot brittleness due to the sulphur contained in the steel. The lower limit of the manganese quantity is 0.05%.

Aluminium is added as a deoxidizer, but balanced deoxidizing can not be accomplished when the residue after deoxidizing is less than 0.015%. On the other hand, when the quantity of aluminium is more than 0.13%, the steel hardens and the cost also increases. Too great a quantity of sulphur deteriorates the formability and also makes the corrosion resistance poor, so the upper limit of the sulphur content is 0.03%.

The addition of silicon and phosphorus either make steel hard or cause deterioration in the quality of the dry forming essential for the present invention, so the upper limit of the quantity of these elements is defined as 0.05% and 0.03% respectively.

Titanium and niobium are added in order to decrease the quantity of solid dissolved carbon and nitrogen contained in the steel and so limit the work hardening. When the quantity of them is less than the lower limit, their effects are unsatisfactory. When the quantity of them is more than the upper limit, the crystal grains become fine, causing increased work hardening which is unsuitable for the dry forming process. When the quantity of carbon is in the range preferably from 0.001 to 0.03%, more preferably 0.001 to 0.01%, the addition of titanium and niobium is more effective. The quantity of nitrogen, which is undefined, is preferably less than 0.005%. The reduction effect on the amount of solid dissolved carbon and nitrogen due to the addition of titanium and niobium can be evaluated by the aging index described later.

Secondly, the crystal grain size of the steel is defined in the range from 6 to 30 μm.

The grain size is defined as follows:

The grain size is defined as the average of the measured values of the grain sizes of the largest 3 grains selected from those observed in a 3 cm x 3 cm visual field at a magnification of 200 (real area: 150 μm x 150 μm) in the section parallel to the rolling direction of the steel sheet. The grain size of each grain is the average value of the longer width and the shorter width measured in the cross section of the grain. The longer width is defined as the length of the longest segment line passing through the centre of the grain, and the shorter width is defined as the length of the segment line passing through the centre of the grain perpendicular to the longest segment line. The grain size definition deduced from the measured sizes of the largest grains, as mentioned above, may be thought of in the following way.

Suppose that all the steel grains are composed of spheres having the same diameter, then the sections of the grains are observed as circles of different diameters. The diameter of the largest circle is the diameter of the sphere, which is the real grain size. As mentioned above, the steel grain size is defined in terms of the size of the largest grains.

Steel having a crystal grain size smaller than 6 μm is not apt to have a rough surface caused by forming and thus good adhesion to the laminated resin is obtained, but it causes high work hardening and deteriorates the formability in the dry forming process essential for the present invention. In the present invention, as the thickness of the resin laminated steel sheet in the can wall is reduced to 40 to 70% of the original thickness, the blank diameter defined relative to the fixed can height can be smaller than that of DTR. Therefore, as the drawing ratio (blank diameter/diameter of finished can) can be small, a rough surface is hardly caused and it is unnecessary to make the crystal grain size small, unlike that for DTR. On the contrary, steel having a smaller crystal grain size is undesirable because it causes higher work hardening and deteriorates the formability in the dry forming process. However, steel having a crystal grain size of more than 30 μm is apt to lead to a rough surface, even if the aforementioned drawing ratio is small. It also causes unsatisfactory adhesion to the laminated resin layer and breaking of the can wall. The upper and lower limit of the crystal grain size of the steel is therefore defined as above, and steel having the crystal grain size from 8 to 15 $\mu$m is more preferable for the objective of the present invention. The crystal grain size of the steel can be controlled by the aforementioned chemical composition of the steel, the finish temperature in hot rolling, the coiling temperature after hot rolling and modifying the conditions of recrystallization after cold rolling.

The reason why the aging index is defined as less than 5 kg/mm$^2$ is now described. The aging index is proportional to, and is used as a measure of, the amount of solid dissolved carbon and nitrogen contained in the steel. An increase in the amount of these elements in the steel causes higher work hardening. The aging index is defined as less than 5 kg/mm$^2$ to limit the work hardening. The aging index is defined as the difference in the yield strength of the steel which is deformed by elongation of 8 to 10%, before and after heating it for 1 hour at 100°C. It can be controlled by controlling the coiling temperature after hot rolling, the cooling rate after recrystallization annealing, the addition of titanium and niobium and so on.

If the finished can is positively or negatively pressurized in use, then the can bottom and can wall should have sufficient strength to endure such a pressure. In particular, when a can is positively pressurized, the pressure proof strength of the can bottom is critical. The pressure proof strength depends on the sheet thickness and the yield strength, being roughly proportional to (sheet thickness)$^2$ x (yield strength). The required pressure proof also depends on the contents of the can. The lower limit of the yield strength, the tensile strength and the thickness of the steel sheet are defined based on the required pressure proof strength. On the other hand, the upper limit of the yield strength and the tensile strength are defined according to the degree of damage to the laminated resin layer during the ironing process. Based on these conditions, the preferred yield strength and the preferred tensile strength of the steel sheet used for the present invention are defined from 25 to 70 kg/mm$^2$ and from 25 to 73 kg/mm$^2$, respectively. When these quantities are higher than the upper limit, the can wall is apt to break due to the damage to the resin layer. Also, the preferred yield ratio, represented by (yield strength/tensile strength),is between 0.7 and 1. A high yield strength, which affects the can bottom strength, and a low deformation resistance in the processing, which affects the damage to the resin layer during the ironing, are preferable for the objective of the present invention. The upper limit of the steel sheet thickness is generally 0.3 mm, based on the required pressure proof strength of the formed can (a thickness of more than 0.3 mm is generally not required) and also on the minimum cost. With a steel having higher yield or tensile strength, the thickness of it can be reduced because the formed can has an adequate pressure proof strength. With a steel having a higher yield strength, the thickness of it is preferably as thin as possible (as long as the formed can has the required pressure proof strength). In addition, in cases where the extent of reduction of the thickness of the can wall is the same, with a thinner steel sheet the total deformation and the heat generation in the processing can be reduced. The lower limit of the steel sheet thickness is preferably 0.15 mm, based on aiming at a stable, continuous and high-speed production of the steel sheet having a uniform thickness.

The resin shown in Fig. 1, which is laminated to the steel sheet, is a thermoplastic resin, preferably a crystalline polyester having a thickness in the range from 10 to 50 $\mu$m and a melting temperature of 180 to 260°C. In the dry forming based on the present invention, the thermoplastic resin, applied as a resin to be laminated to the steel sheet, can make the lubrication during the ironing more effective. It is softened by the heat generated due to the friction between the outside surface of a can and the ironing dies during the ironing process, which leads to a lubricating effect. The higher the temperature of the dies, the more effectively the lubrication is performed. However, the higher the temperature of the dies the further the resin in the ironing dies is softened and the more the resin is damaged by the surface pressure in proportion to the deformation resistance of the steel sheet. When the steel sheet is in direct contact with the ironing dies, the can wall breaks. Therefore, excessive softening of the thermoplastic resin is not preferable and the temperature of the ironing dies is preferably kept within a suitable range, more preferably from 25°C to the glass transition temperature of the laminated thermoplastic resin. Also, a thermoplastic resin which is softened at a low temperature is not preferable; instead, a thermoplastic resin having a melting temperature (used as an index representing the softening sensitivity) higher than 180°C is preferably applied because it improves the formability in the dry forming which is the objective of the present invention. In the industrial production, the drawing and the ironing are successively practised and the temperature of the can wall sometimes goes up above 100°C. At that time, with a thermoplastic resin having a lower melting temperature, it is softened or melts, and the appearance of the formed can is damaged or the steel is exposed in the can and the corrosion resistance deteriorates. In addition, the thermoplastic resin sets on the forming tools, so that continuous production cannot be performed. For this reason the thermoplastic resin has a melting temperature higher than 180°C. On the other hand, with that having a melting temperature higher than 260°C, there is insufficient lubrication due to the softening of the resin during the forming. For the reasons described above, the melting temperature of thermoplastic resin is preferably from 180 to 260°C. The thickness of the thermoplastic resin laminated to the steel sheet is defined from 10 to 50

μm. If the resin thickness is less than 10 μm, there is a possibility that the ironing process dies come directly into contact with the steel sheet on the outside surface of the can during the ironing and then the can wall breaks. There is also a possibility that the corrosion resistance on the inner surface of the can is reduced. In addition, it is hard to laminate the thermoplastic resin to the steel sheet continuously and uniformly. The upper limit of the resin thickness is defined as 50μm based on the avoidance of wrinkles caused during the drawing process and also for reasons of cost.

Among the thermoplastic resins having a melting temperature of 180 to 260°C, a polyester resin, especially polyethylene terephthalate, polybutylene terephthalate, a co-polyester resin mainly composed of ethylene terephthalate units or a polyester resin composed of a mixture of these resins is preferably employed in the present invention. In particular may be mentioned a co-polyester resin composed of 75 mol % of polyethylene terephthalate and 25 mol % of polyethylene isophthalate, polyethylene sebacate or polyethylene adipate, or a polyester resin composed of polyethylene terephthalate or above-mentioned polyester resin blended with polybutylene terephthalate.

The above described polyester resin can be laminated to the steel sheet by any of the following methods:
(1) A melted polyester resin is directly extruded on both sides of a steel sheet.
(2) A non-oriented or oriented polyester resin film produced in known manner is thermally laminated to both sides of a steel sheet.
(3) The above-mentioned non-oriented or oriented polyester resin film is laminated to both sides of a steel sheet by laying an adhesive between the resin film and the steel sheet.
(4) A combination of any of the above.

All these methods can be applied to the production of the resin laminated steel sheet of the present invention, but a biaxally oriented polyester resin film is preferably applied based on such required characteristics of the formed can as the impact resistance of the laminated resin layer and the permeation resistance against corrosive contents. In such a case, it is preferable to laminate a biaxially oriented polyester resin film to a steel sheet in order that the innermost layer of the resin film (directly in contact with a steel surface) has a planar orientation coefficient of 0.00 to 0.05 and the outermost (the furthest from a steel surface) layer of the laminated resin film has a planar orientation coefficient of 0.01 to 0.10. When the planar orientation coefficient of the innermost layer is more than 0.05, the laminated resin film is apt to peel off during processing. On the other hand, in cases where the planar orientation coefficient of the outermost layer is less than 0.01, the biaxial orientation in the whole resin film has almost disappeared. When the steel sheet laminated with such a resin film is processed into a drawn and ironed can by dry forming, cracks are sometimes caused in the laminated polyester resin layer, and the can cannot then be filled with corrosive contents. In cases where the planar orientation coefficient at the outermost layer is more than 0.10, the laminated resin film has an insufficient extendability, and cracks are sometimes caused in the laminated resin layer under severe processing conditions. Therefore, it is preferable in the resin laminated steel sheet of the present invention that the planar orientation coefficient at the outermost layer is kept within a range of 0.01 to 0.10 and that at the innermost layer is kept within a range of 0.00 to 0.05. Also, lamination by the above described method (3) is suitable for the inside surface of a can intended to carry corrosive contents. In that case, the control of the planar coefficient of the laminated resin film as described above is not necessary. Any known adhesive can be applied, but a thermosetting resin containing an epoxy group in its molecular structure is more preferable. It can be applied on the one side of the steel surface to be laminated with the resin film, or to both sides of the steel sheet.

The planar orientation coefficient of the innermost and the outermost layer of the laminated polyester resin film is determined by the following method. Firstly, the laminated polyester resin film is removed from the steel sheet by dipping the laminate into hydrochloric acid solution which dissolves only the steel sheet. After rinsing in water and drying the film, the refractive indexes in the lengthwise, the widthwise and the thickness directions of both layers (the innermost and the outermost layer) of the polyester resin film are measured with a refractometer. Then, the planar orientation coefficient is determined according to the following equation,

$$A = \frac{(B + C)}{2} - D$$

where A represents the planar orientation coefficient of the polyester resin film,
B represents the refractive index of the polyester resin film in the lengthwise direction,
C represents the refractive index of the polyester resin film in the widthwise direction,
D represents the refractive index of the polyester resin film in the thickness direction.

The refractive indexes measured by the method described above show the average value within 5 μm from the outermost layer (of either side of the resin film). Thus it is possible to distinguish the planar orientation coefficient in the innermost layer from that in the outermost layer.

In addition, in the present invention, the application of a biaxially oriented double layered film composed of an upper layer film and a lower layer film having different melting temperatures is also possible, whereby the planar coefficient of either side of the film can easily be controlled within a preferred range.

Furthermore, in the present invention, the intrinsic viscosity (IV value) of the polyester resin film is also one of the important factors. IV, which is proportional to the molecular weight of the resin, greatly affects the stiffness and the formability of the resin film. In cases where the resin film has an IV less than 0.50, the resin layer on the drawn and ironed can has a poor impact resistance, even if the planar coefficient of the laminated resin film is kept within the preferred range. Many micro cracks are caused in the polyester resin layer on the inside of the impacted area, and the steel substrate is exposed. On the other hand, a resin film having an IV more than 0.70 encounters a high viscous resistance during the ironing process, which sometimes causes practical problems.

In the present invention, the lamination of a pigmented thermoplastic resin film to the side of a steel sheet which will be the outside of a can is also an important factor from the artistic viewpoint. It is also possible to add white pigment, based on titanium dioxide, to the resin during its production in order to improve the print contrast of the design applied on the outside of a can. Inorganic or organic pigment, or that coloured other than white can be used, and may be selected according to the intended uses. A good print contrast can be obtained by the addition of 1 to 20% of pigment.

Furthermore, in the present invention other thermoplastic resins such as bisphenol A polycarbonate, one of the polyamide resins selected from 6-nylon, 6,6-nylon, 6-6,6-co-polymer nylon, 6,10-nylon, 7-nylon and 12-nylon, and polyethylene naphthalate can also be applied. These resins can be used alone, or can be co-extruded with other resins and used as an upper layer or an intermediate layer of a double layered or a triple layered film. Also, a resin composed of an aforementioned polyester resin blended with these thermoplastic resins can be used. In addition, a double layered film composed of an upper layer of aforementioned polyester resin and a lower layer of aforementioned polyester resins blended with aforementioned thermoplastic resin can be used. In some cases, additives such as antioxidants, stabilizers, antistatic agents, lubricants and corrosion inhibitors are added as far as this does not cause other characteristics to deteriorate during the manufacturing process of the polyester resin used for the present invention.

As shown in Fig. 1 a steel sheet 1 to be laminated with a thermoplastic resin 3 is preferably ECCS having a double layered film 2 composed of an upper layer of hydrated chromium oxide of 5 to 25 mg/m$^2$ and a lower layer of metallic chromium of 30 to 200 mg/m$^2$. The centre line average height of the surface roughness of the steel sheet is 0.05 to 0.6 μm based on the adhesion to the thermoplastic resin and the corrosion resistance.

The centre line average height is defined as follows:

In a length $\ell$ of the measured roughness curve, if the centre line direction of the measured roughness curve is defined as the x axis and the longitudinal direction (i.e. the peak height direction of the measured roughness curve) is defined as the y axis, the roughness curve is given by the following formula:

$$y = f(x)$$

and the centre line average height, Ra (in μm) is given by the following formula:

$$Ra = \frac{1}{\ell} \int_0^\ell |f(x)| \, dx$$

When the centre line average height of the surface roughness is more than 0.6 μm, the laminated thermoplastic resin sometimes peels off in the upper edge part of a can where the process intensity is heavier. The lower limit of 0.05 μm is based not only on the performance, but also on the difficulty of reliably producing a steel sheet having a centre line average height of the surface roughness less than 0.05 μm.

A lubricant 4 shown in Fig. 1 which evaporates at a high temperature is coated on the thermoplastic resin and plays an important part when the dry forming is carried out at high production intensity and at high speed. The lubricant is preferably that of which more than 50% evaporates when a formed can is heated for a few minutes at about 200°C after forming, and is selected from simple substances such as liquid paraffin, synthetic paraffin or natural wax, or a mixture thereof according to the processing conditions and the heating conditions after forming. One having characteristics such as a melting temperature below that of the thermoplastic resin, preferably of 25 to 80°C and a boiling temperature of 180 to 400°C is preferably applied to the present invention. The coating weight, which depends on the surface area of the can (the inner or outer surface), the processing conditions and the heating conditions after forming, is preferably 5 to 100 mg/m$^2$, more preferably 30 to 60 mg/m$^2$.

In the above-mentioned manner, by the definition of the chemical composition, the mechanical and the physical properties of a steel sheet, and those of a thermoplastic resin, and the application of a lubricant which evaporates at a high temperature on the thermoplastic resin, a steel sheet can be obtained which is suitable for producing a can having a can height about twice the length of the can diameter and a wall thickness from 40 to 70% of the original sheet thickness.

The ironing process will now be explained. By the application of a composite process, composed of a redrawing process and an ironing process at the same time, to the thinning of a can wall, the objective of the present invention can further effectively be performed. Figures 2A-2E show a mode of the composite process composed of a drawing and an ironing process suitable for producing a can having a thin wall and a high can height by dry forming from the resin laminated steel sheet of the present invention. At first, as shown in Fig. 2A, a blank 5 is punched out from a resin laminated steel sheet as shown in Fig. 1. Then it is drawn into a drawn can 6 (Fig. 2B) and redrawn into a redrawn can 7 (Fig. 2C) having a smaller diameter than that of the drawn can 6, and then it is redrawn and ironed at the same time (the composite process) into a redrawn and ironed can 8 (Fig. 2D) having a smaller diameter than that of the redrawn can 7. Subsequently, the upper edge part 9 of the can 8 is shaped into a flange 10, then trimmed off and shaped into a trimmed can 11 (Fig. 2E), then the upper edge part of this can 11 may be processed by forming a neck-in and a flange, and then formed into a final can as shown in Fig. 4. The composite process whose outline is shown in Fig.3 plays an important role in producing a can having a high can height and a thin wall. In the composite process, an ironing part 12 is provided behind a redrawing die 13 and the process is carried out by redrawing and ironing at the same time. By ironing with the imposition of an effective back tension at the ironed part of the steel sheet, the resin layer on what is to be the outside of a can is hardly damaged. The length L of the can wall 14 between the redrawing part and the ironing part is determined based on the gauge necessary for the next neck-in forming step. Furthermore, it is desirable for the present invention that the temperatures of the redrawing die 13 and the ironing die 15 are in the range from 25°C to the glass transition temperature of the laminated resin. Fig. 5 shows an example profile of a wall thickness (the steel sheet alone: the laminated resin film is ignored) in the can height direction of a trimmed can 11 produced from a thermoplastic resin laminated ECCS having an original sheet thickness of 0.20 mm under the process shown in Fig. 2. As shown in Fig. 5, the thickness of the can body is thinner (about 0.120 mm which is 60% of the original sheet thickness), and that of the upper part of it is thicker (about 80% of the original sheet thickness) and suitable for the next neck-in forming process. And it can clearly be seen from the process shown in Fig. 3 that in cases where an ironing punch is used, the diameter of which at the part corresponding to the can body wall 16 and at that corresponding to the upper edge part 9 is the same, the stepped thickness difference between the body wall part 16 and the upper part 9 is formed more visibly on the outside of the can, in contrast with the case of DWI where the step is on the inside. Fig. 2A to Fig. 2E show the case where the step is formed on the outside of the can. On the other hand, it goes without saying that in cases where an ironing punch is used, the diameter of which at the part corresponding to the upper edge part 9 is smaller than that corresponding to the can body wall 16, the stepped thickness difference is formed on the inside of the can. The exterior of the can is scarcely affected by the step formed on the outside of the can, and the stripping performance of the ironing punch is scarcely affected by the step formed on the inside of the can. Therefore, there are no problems with can quality or with the forming process whether the step is formed on the inside or on the outside of the can. The process is described in greater detail in the European patent application No. 94305784.4.

The present invention is explained in further detail by the following Examples.

Example 1

6 kinds of steels A, B, C, D, E and F, whose chemical compositions (in weight percent) are shown in TABLE 1, were melted in a converter and made into slabs, which were then hot rolled, finished at a temperature of 900°C and coiled at a temperature of 650°C. They have a thickness of 1.8 mm. After being pickled, they were cold rolled into sheets having thicknesses of 0.2 and 0.3 mm, and then they were annealed in the 2 types of recrystallization annealing shown in TABLE 2 (CA : continuous annealing, BA : box annealing). Then, the steel sheets having a thickness

TABLE 1

| No. | A | B | C | D | E | F |
|-----|-----|-----|-----|-----|-----|-----|
| C | 0.005 | 0.006 | 0.007 | 0.030 | 0.070 | 0.140 |
| Mn | 0.15 | 0.16 | 0.18 | 0.22 | 0.23 | 0.45 |
| Al | 0.055 | 0.053 | 0.057 | 0.060 | 0.055 | 0.063 |
| Si | 0.01 | 0.01 | 0.01 | 0.01 | 0.01 | 0.02 |
| P | 0.008 | 0.010 | 0.007 | 0.011 | 0.012 | 0.011 |
| S | 0.012 | 0.012 | 0.015 | 0.016 | 0.010 | 0.018 |
| Nb | 0.008 | 0.006 | - | - | - | - |
| Ti | - | 0.010 | - | - | - | - |

(weight %)

Remarks - : not added

of 0.20 mm were rolled at a reduction ratio of 1 to 2% (SR sheets), whilst those having a thickness of 0.3 mm were rolled to a thickness of 0.2 mm (DR sheets). Sheets C-2, D-2 and F referred to herein are included as Comparative Examples. SR and DR sheets were electrolytically treated in a chromate solution (metallic chromium : 120 mg/m$^2$ and hydrated chromium oxide : 18 mg/m$^2$, based on the weight of chromium), then they were produced as 11 kinds of steel substrates to be laminated with thermoplastic resins. Then, these ECCS were laminated with thermoplastic resins as follows. Firstly, a biaxially oriented co-polyester resin film composed of 88 mol % of polyethylene terephthalate and 12 mol % of polyethylene isophthalate (thickness: 25 μm, orientation coefficient : 0.126 (on both sides of the film) and melting temperature : 229°C) was laminated to the side of these ECCS which was to become the inside of a can, and heated to 240°C. A white coloured biaxially oriented co-polyester resin film having the same chemical composition as the above-mentioned film, pigmented with titanium dioxide, (thickness : 20 μm) was laminated to the other side, which was to become the outside of a can, at the same time, and then they were immediately dipped into water and cooled off. After the lamination, the laminates were dried and coated on both sides with about 50 mg/m$^2$ of paraffin-based wax, then they were processed as follows. Firstly, they were punched out into blanks having a diameter of 160 mm, then drawn into drawn cans having a diameter of 100 mm. Next, they were redrawn into cans having a diameter of 80 mm, and then they were processed into drawn and ironed cans having a diameter of 66 mm in the composite process composed of redrawing and ironing at the same time. The composite process was carried out under conditions in which the distance between the redrawing part and that of the ironing (the upper edge part of a can) was 20 mm, the corner radius of the redrawing die

TABLE 2

| No. | A-1 | A-2 | B | C-1 | C-2 | D-1 | D-2 | D-3 | E-1 | E-2 | F |
|---|---|---|---|---|---|---|---|---|---|---|---|
| recryst. annealing * | CA | CA | CA | CA | BA | CA | CA | CA | CA | BA | CA |
| SR or DR ** | SR | DR | SR | SR | SR | SR | SR | DR | SR | DR | SR |
| crystal grain size ($\mu$m) | 19 | 19 | 18 | 21 | 33 | 10 | 10 | 10 | 8 | 12 | 5 |
| surface roughness *** ($\mu$m) | 0.15 | 0.16 | 0.14 | 0.22 | 0.21 | 0.18 | 0.80 | 0.19 | 0.21 | 0.15 | 0.16 |
| yield strength (kg/mm$^2$) | 25 | 62 | 26 | 26 | 18 | 34 | 34 | 67 | 41 | 67 | 45 |
| tensile strength (kg/mm$^2$) | 33 | 63 | 34 | 34 | 26 | 43 | 42 | 70 | 45 | 69 | 48 |
| aging index (kg/mm$^2$) | 1.5 | 0.5 | 0.0 | 3.0 | 0.0 | 5.0 | 5.0 | 2.0 | 4.0 | 1.5 | 4.5 |

Remarks * recryst. annealing : recrystallization annealing

** SR or DR : SR (skin passed at the reduction ratio of 1 to 2%) or DR (rolled at the reduction ratio of 33.3%)

*** surface roughness : centre line average height of surface roughness

was the same as the sheet thickness and the clearance gap between the ironing part and the punch was 55% of the original sheet thickness. During all the above-mentioned processes, no water-based cooling and lubricating agent was applied and dry forming was practised in each process. The formed cans were evaluated according to any breakage of a can wall, the appearance of the outside of a can, the metal exposure inside a can and the adhesion of the laminated resin layer to the ECCS substrate. In the composite process, the process proceeds in the direction of the arrow 17 shown in Fig. 3. The forming was completed with the flanged part kept in the upper edge part of a can, then the processed can was removed along the reverse direction to that of the arrow by pulling back the punch 18. Then the upper part of the can was trimmed off, processed by neck-in and flange forming, and then the finished can 19 was obtained (Fig. 4) having a high can height and a thin wall, and being in a suitable state for seaming the can end to it. The formed cans were evaluated according to any breakage of a can wall, the appearance of the outside of a can, the metal exposure inside a can and the adhesion of the laminated resin layer to the ECCS substrate based on the following standards:

1) the break ratio of the can wall, evaluated by the ratio of the number of cans whose walls were broken to the total number of cans formed,

◎(excellent): 0%, ○(good): <10%, Δ(fair): from 10% to 30%, x(bad): >30%

2) the appearance of the outside of a can, evaluated by the ratio of the number of cans whose outsides were damaged during the formation to the total number of cans formed

◎(excellent): 0%, ○(good): <10%, Δ(fair): from 10% to 30%, x(bad): >30%

3) the metal exposure inside a can (evaluated by the enamelrater value (ERV : mA)) wherein ERV was measured as follows:

The formed can was filled with sodium chloride solution, and current was measured in milliampere at a voltage of 6.3 V.

◎(excellent): between 0 mA and 0.05 mA, ○(good): between 0.05 mA and 0.5 mA, Δ(fair): from 0.5 mA to 5 mA, x(bad): >5 mA

4) the adhesion of the laminated resin layer after forming (evaluated by the degree of peeling after neck-in forming)

◎(excellent): no peeling, ○(good): slightly peeled off but no problem for practical use, Δ(fair): visibly peeled off, x(bad): peeled off in the whole upper part of a can

## Example 2

The steel sheets C-1, C-2, D-1 and D-2 shown in TABLE 2 were electrolytically treated in a chromate solution in the same way as for Example 1 (metallic chromium : 75 mg/m$^2$ and hydrated chromium oxide : 13 mg/m$^2$, based on the weight of chromium), then they were produced as the substrates to be laminated with thermoplastic resins. A biaxially oriented co-polyester resin film composed of 88 mol % of polyethylene terephthalate and 12 mol % of polyethylene isophthalate (thickness: 12 μm, orientation coefficient : 0.126 (on both sides of the film) and melting temperature : 229°C) was laminated to the side of the ECCS which was to become the inside of a can and heated to 240°C. A white coloured biaxially oriented co-polyester resin film having the same chemical composition as the above-mentioned film, pigmented with titanium dioxide, (thickness : 12 μm) was laminated to the other side of the ECCS at the same time, and then they were immediately dipped into water and cooled off. After the lamination, the laminates were dried and coated on both sides with about 50 mg/m$^2$ of paraffin-based wax, then they were processed in the same way as for Example 1, and then the formed cans were evaluated in the same way as for Example 1.

## Example 3

The steel sheets D-1 and D-2 shown in TABLE 2 were electrolytically treated in a chromate solution in the same way as for Example 1 (metallic chromium : 135 mg/m$^2$ and hydrated chromium oxide : 15 mg/m$^2$ based on the weight of chromium), then they were produced as the substrates to be laminated with thermoplastic resins. A biaxially oriented double layered co-polyester resin film composed of an upper co-polyester resin layer consisting of 88 mol % of polyethylene terephthalate and 12 mol % of polyethylene isophthalate and a lower copolyester resin layer consisting of 94 mol % of polyethylene terephthalate and 6 mol % of polyethylene isophthalate (thickness of upper layer film : 15 μm, that of lower layer film : 5 μm, melting temperature of upper layer film : 229°C, that of lower layer film : 226°C, orientation coefficient of upper layer film : 0.123, that of lower layer film : 0.083) was laminated to the side of the ECCS which was to become the inside of a can and heated to 235°C. A white coloured biaxially oriented co-polyester resin film having the same chemical composition as that for Example 1, pigmented with titanium dioxide, (thickness : 15 μm) was laminated to the other side of the ECCS at the same time, and then they were immediately dipped into water and cooled off. After the lamination, the laminates were dried and coated on both sides with about 50 mg/m$^2$ of paraffin-based wax, then they were processed in the same way as for Example 1, and the formed cans were evaluated in the same way as for Example 1.

Example 4

The steel sheets C-1, C-2, D-1 and D-2 shown in TABLE 2 were electrolytically treated in a chromate solution in the same way as for Example 1 (metallic chromium : 95 mg/m$^2$ and hydrated chromium oxide : 15 mg/m$^2$, based on the weight of chromium), then they were produced as the substrates to be laminated with thermoplastic resins. A biaxially oriented co-polyester resin film composed of 88 mol % of polyethylene terephthalate and 12 mol % of polyethylene isophthalate (thickness : 20 μm, orientation coefficient : 0.126 (on both sides of the film) and melting temperature : 229°C) on which the side intended to be laminated to ECCS was coated with an epoxy-phenol based primer in an amount (dried weight) of 0.5 mg/m$^2$, was laminated to the side of the ECCS which was to become the inside of a can and heated to 240°C. A white coloured biaxially oriented co-polyester resin film having the same chemical composition as that for Example 1, pigmented with titanium dioxide, (thickness : 15 μm) was laminated to the other side of the ECCS at the same time, and then they were immediately dipped into water and cooled off. After the lamination, the laminates were dried and coated on both sides with about 50 mg/m$^2$ of paraffin-based wax, then they were processed in the same way as for Example 1, and then the formed cans were evaluated in the same way as for Example 1.

The evaluated results are shown in TABLE 3 and TABLE 4, from which it can clearly be seen that the thermoplastic resin laminated steel sheet of the present invention is suitable for a can produced by dry forming and having a high can height and a thin wall.

TABLE 3

| Example No. | Example 1 | | | | | | | | | | |
|---|---|---|---|---|---|---|---|---|---|---|---|
| No. | A-1 | A-2 | B | C-1 | C-2 | D-1 | D-2 | D-3 | E-1 | E-2 | F |
| discrimination of examples | Example | Example | Example | Example | Comp.* Example | Example | Comp.* Example | Example | Example | Example | Comp.* Example |
| breakage of can wall | ◉ | ○ | ◉ | ◉ | ○ | ○ | ○ | ○ | ○ | ○ | x |
| resin damage of outside | ◉ | ○ | ◉ | ◉ | ○ | ○ | ○ | ○ | ○ | ○ | x |
| metal exposure of inside | ◉ | ◉ | ◉ | ◉ | Δ | ◉ | Δ | ◉ | ◉ | ◉ | ◉ |
| adhesion (inside) | ○ | ○ | ○ | ○ | x | ◎ | x | ◎ | ◎ | ◎ | ◎ |

Remarks * Comp. Example : Comparative Example

EP 0 666 168 A1

TABLE 4

| Example No. | Example 2 | | | | Example 3 | | Example 4 | | | |
|---|---|---|---|---|---|---|---|---|---|---|
| No | C-1 | C-2 | D-1 | D-2 | D-1 | D-2 | C-1 | C-2 | D-1 | D-2 |
| discrimination of examples | Example | Comp. * Example | Example | Comp. * Example | Example | Comp. * Example | Example | Comp. * Example | Example | Comp. * Example |
| breakage of can wall | ○ | ○ | ○ | ○ | ◎ | ○ | ○ | ○ | ○ | ○ |
| resin damage of outside | ○ | ○ | ○ | ○ | ◎ | ○ | ○ | ○ | ○ | ○ |
| metal exposure of inside | ○ | x | ○ | x | ◎ | Δ | ◎ | Δ | ◎ | Δ |
| adhesion (inside) | ○ | x | ◎ | x | ○ | x | ○ | x | ◎ | x |

Remarks * Comp. Example : Comparative Example

EP 0 666 168 A1

**Claims**

1.  A steel sheet containing carbon, manganese, aluminium, silicon, phosphorus and sulphur in the following amounts by weight:

| carbon: | from 0.001 to 0.10% |
|---|---|
| manganese: | from 0.05 to 0.50% |
| aluminium: | from 0.015 to 0.13% |
| silicon: | less than 0.05% |
| phosphorus: | less than 0.03% |
| sulphur: | less than 0.03% |

and in which the remainder is iron and small amounts of any inevitable impurities, and having the following characteristics:

| crystal grain size: | from 6 to 30 $\mu$m |
|---|---|
| centre line average height of the surface roughness: | from 0.05 to 0.6 $\mu$m |

wherein said steel sheet is electrolytically coated with chromium and laminated on both sides with a layer of thermoplastic resin having a thickness of 10 to 50 $\mu$m.

2.  A steel sheet as claimed in claim 1 having a thickness of from 0.15 mm to 0.30 mm (excluding the thickness of the laminated thermoplastic resin).

3.  A steel sheet as claimed in claim 1 or claim 2 having the following characteristics:

| yield strength: | from 25 to 70 kg/mm$^2$ |
|---|---|
| yield ratio: | between 0.7 and 1 |
| aging index: | less than 5 kg/mm$^2$ |

4.  A steel sheet as claimed in any preceding claim wherein the thermoplastic resin is a crystalline polyester resin.

5.  A steel sheet as claimed in any preceding claim wherein a lubricant is present on the surface of the thermoplastic resin, which lubricant has a melting temperature below that of the thermoplastic resin.

6.  A steel sheet as claimed in any preceding claim further comprising a layer of adhesive between the electrolytically chromium-coated steel and the thermoplastic resin.

7.  A steel sheet as claimed in any preceding claim further containing from 0.001% to 0.03% by weight of niobium and from 0.005% to 0.05% by weight of titanium.

8.  Use of a steel sheet as claimed in any one of the preceding claims for the production of a drawn and ironed can by a dry forming process.

FIG.1.

FIG. 2A.

FIG.2B.

FIG.2C.

FIG.2D.

FIG.2E.

EP 0 666 168 A1

FIG. 3.

_18_

_13_

_14_

L

_15_

_12_

_17_

_16_

FIG. 4.

_16_

_19_

FIG. 5.

CAN WALL THICKNESS (µm)

160

140

120

10   20   30   ~   70   80   90   100   110   120

CAN HEIGHT FROM BOTTOM (mm)

European Patent
Office

**EUROPEAN SEARCH REPORT**

Application Number

EP 95 30 0435

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | FR-A-2 686 815 (TOYO KOHAN CO.)<br>* the whole document *<br>--- | 1,2,8 | B32B15/08<br>B65D25/14 |
| Y | EP-A-0 199 487 (NIPPON STEEL CORPORATION)<br>*Claims 1-7; Examples 2, 7-14*<br>--- | 1,2,4,8 | |
| Y | DE-A-38 36 858 (TOYO KOHAN CO.)<br>*Patentansprüche 1-10*<br>--- | 4,8 | |
| Y | EP-A-0 062 385 (DOW CHEMICAL COMPANY)<br>*Claims 1-17*<br>--- | 1,4,8 | |
| Y | EP-A-0 063 395 (DOW CHEMICAL COMPANY)<br>*Claims 1-13*<br>--- | 1,4,8 | |
| A | EP-A-0 492 870 (CMB FOODCAN)<br>* the whole document *<br>--- | 1,8 | |
| Y | EP-A-0 432 497 (NIPPON STEEL CORPORATION)<br>*Claims 1-6*<br>--- | 4,8 | |
| A | EP-A-0 312 304 (MB GROUP PLC)<br>* the whole document * | 1,4,8 | **TECHNICAL FIELDS SEARCHED** (Int.Cl.6) |
| A,D | & WO-A-89 03303 (CMB FOODCAN)<br>----- | 1,4,8 | B32B<br>B65D<br>C22C |

The present search report has been drawn up for all claims

| Place of search | Date of completion of the search | Examiner |
|---|---|---|
| THE HAGUE | 7 April 1995 | Lippens, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)